# EUROPEAN PATENT APPLICATION

(11) **EP 4 681 581 A1**
(43) Date of publication of application: **21.01.2026**
(21) Application number: 23927658.7
(22) Date of filing: 16.03.2023
(51) Int. Cl.: A47C 7/54, F16H 19/04

(54) **ARMREST ASSEMBLY AND CHAIR INCLUDING SAME**

(30) Priority: 15.03.2023 KR 20230033724
(71) Applicant: Sidiz Inc., Pyeongtaek-si, Gyeonggi-do 17843 (KR)
(72) Inventor: JUNG, Kyu Sik, Pyeongtaek-si Gyeonggi-do 17843 (KR)
(74) Representative: impuls legal PartG mbB
(86) International application number: PCT/KR2023/003505
(87) International publication number: WO 2024/190936

(57) **Abstract**

The present invention relates to an armrest assembly and a chair including same. In particular, the armrest assembly comprises: an armrest support pad that supports the arm of a user and that slides in the front-rear direction and swings in the left-right direction from the upper end portion of an armrest support; and a spindle guide part that is fixed to the upper end portion of the armrest support and guides the sliding and swinging of the armrest support pad. The armrest support pad is provided such that the sliding and swinging is guided while the armrest support pad is gear-engaged with the spindle guide part, and thus provides the advantages of improving user convenience and reducing the manufacturing cost of the product.

## Description

### [Technical Field]

The present disclosure relates to an armrest assembly and a chair including the armrest assembly, and more particularly, to an armrest assembly and a chair including the armrest assembly, which perform a smooth damping operation in response to an external force applied when a user adjusts an armrest support pad, which supports the arm of the user, through forward and backward sliding movement and leftward and rightward swinging movement, thereby improving user convenience and emotional quality of the product.

### [Background Art]

Generally, chairs include armrests, which are respectively installed on left and right sides of a seat portion to allow a user seated on the seat portion to place both arms thereon. The armrests are configured to perform sliding movement in a forward or backward direction or swinging movement in a leftward or rightward direction according to manipulation by an external force applied by the user.

In order to provide a manipulation feeling to the user and implement a stopped state after movement, an armrest installed in a conventional chair is provided with a detent structure (step structure) in the form of irregularities therein. Accordingly, the user needs to apply an external force exceeding a predefined level to move past the detent structure from the stopped state. In the case where the external force provided by the user is excessive, the armrest may stop beyond a desired position, resulting in inconvenience in that the user needs to readjust the armrest.

In particular, most conventional armrests are configured such that, when the user adjusts the position of the armrest, a structure made of a soft material such as plastic or rubber, which is coupled to the armrest, moves past the above-described detent structure by an external force provided by the user. In this case, a dull operating noise caused by the detent structure may occur.

Furthermore, a conventional armrest is designed to be stopped only at stepped portions where the detent structure is implemented, and thus has a disadvantage in that sliding movement or swinging movement can be adjusted only to predesigned positions. Here, in order to secure a more comfortable arm placement according to changes in the seated posture, the user needs to lift his/her body into a state where adjustment is possible and then adjust the position of the armrest again, which is also pointed out as an inconvenience.

In addition, in the conventional armrest, even when the number of steps, which are key elements of the detent structure, is to be redesigned to meet a user's need for fine positional adjustment, the design becomes significantly complicated, and there may also be limitations depending on the design (e.g., layout or size) of a chair to which the armrest is applied.

Furthermore, in the conventional armrest, structures and components for the above-described sliding movement in the forward and backward direction and structures and components for the above-described swinging movement in the leftward and rightward direction have to be separately provided, and the assembly structure is also significantly complex, resulting in an increase in the number of components and assembly processes, which causes an increase in the overall manufacturing cost of the product.

### [DISCLOSURE]

### [Technical Problem]

The present disclosure has been made in an effort to solve the above-mentioned technical problem, and an object of the present disclosure is to provide an armrest assembly having a stepless structure, without a detent structure, and a chair including the armrest assembly.

Furthermore, another object of the present disclosure is to provide an armrest assembly configured to enable sliding movement and swinging movement at any position desired by a user, and a chair including the armrest assembly.

In addition, still another object of the present disclosure is to provide an armrest assembly configured to perform damping depending on the level of external force applied by the user for position adjustment, thereby preventing deterioration in emotional quality of the product as perceived by the user, and a chair including the armrest assembly.

In addition, yet another object of the present disclosure is to provide an armrest assembly and a chair including the armrest assembly, which can reduce the manufacturing cost of the product by using a spindle guide unit having a significantly simple structure configured to allow for simultaneous sliding movement in a forward and backward direction and swinging movement in a leftward and rightward direction of an armrest support pad.

Technical objects of the present disclosure are not limited to the aforementioned objects, and other technical objects not described above may be evidently understood from the following description by those skilled in the art.

### [Technical Solution]

An armrest assembly according to an embodiment of the present disclosure may include an armrest support pad configured to support an arm of a user and perform sliding movement in a forward and backward direction and swinging movement in a leftward and rightward direction on an upper end of an armrest support, and a spindle guide unit secured to the upper end of the armrest support, and configured to guide the sliding movement and the swinging movement of the armrest support pad. The sliding movement and the swinging movement of the armrest support pad may be guided, with the armrest support pad gear-engaged with the spindle guide unit.

Here, the spindle guide unit may include a disk body panel having a circular plate shape and secured horizontally to the upper end of the armrest support, and a pair of damping pinion gear sets hooked to the disk body panel in a sliding manner, and gear-engaged with the armrest support pad to damp an external manipulation force applied by the user.

Furthermore, the armrest support pad may include an upper pad configured to directly support the arm of the user, and a lower pad disposed between a lower portion of the upper pad and an upper portion of the armrest support. The pair of damping pinion gear sets may be respectively engaged with a pair of rack gears formed at left and right opposite ends of a rack guide slot formed in the lower pad, the rack guide slot being elongated in the forward and backward direction and vertically penetrating through the lower pad.

Furthermore, the disk body panel may have a diameter greater than a left-right width of the rack guide slot.

In addition, the pair of damping pinion gear sets may be coupled to the disk body panel by an insertion operation through left and right rail recesses formed by cutting out portions of an outer circumferential surface of the disk body panel.

In addition, each of the pair of damping pinion gear sets may include a damping body coupled to the disk body panel and having damping fluid received therein, and a damping gear coupled to a lower portion of the damping body via a damping shaft, the damping gear being rotatably formed with pinion gear teeth that are engaged with a corresponding one of the pair of rack gears of the lower pad.

Moreover, a portion of the damping shaft of the damping gear that extends into an interior of the damping body may be provided with a plurality of damping blades configured to generate friction with the damping fluid when the damping gear rotates.

Furthermore, the damping body may be formed to have a diameter greater than a diameter of the damping gear. When the damping body is inserted into a corresponding one of the left and right rail recesses formed in the disk body panel, a lower peripheral surface of the damping body may be supported on a stepped rail surface formed in the corresponding one of the left and right rail recesses, the stepped rail surface being formed to have a size greater than the diameter of the damping gear and less than the diameter of the damping body.

Furthermore, the disk body panel may be provided with a pair of hook latches configured to latch and retain the damping body to prevent the damping body, after being inserted into a corresponding one of the left and right rail recesses, from being removed outward.

In addition, the armrest support pad may further include a moving guide panel disposed below the lower pad and formed with a predefined moving hole through which a region surrounding a coupling end, by which the spindle guide unit is coupled to the armrest support, is exposed. The armrest support pad may be configured to perform the sliding movement and the swing movement in conjunction with the moving guide panel, the sliding movement and the swing movement being restricted within a range defined by the moving hole.

A chair according to an embodiment of the present disclosure may include the armrest assembly according to any one of the above-mentioned configurations.

### [Advantageous Effects]

In accordance with an armrest assembly and a chair including the armrest assembly according to an embodiment of the present disclosure, the following various effects can be achieved.

First, the present disclosure has a stepless structure, without a detent structure, thereby providing an effect of improving user convenience.

Second, the present disclosure is configured to enable sliding movement and swinging movement at any position desired by a user, thereby providing an effect of alleviating user inconvenience.

Third, the present disclosure enables flexible design change of the armrest assembly for achieving fine position adjustment at a position desired by the user, without being limited by the design of the chair (e.g., layout or size), thereby providing an effect of improved scalability.

Fourth, the present disclosure is configured to perform damping depending on the level of external force applied by the user for position adjustment, thereby providing an effect of preventing deterioration in emotional quality of the product as perceived by the user.

Fifth, the present disclosure employs a spindle guide unit having a highly simple structure configured to allow for simultaneous sliding movement in a forward and backward direction and swinging movement in a leftward and rightward direction of an armrest support pad, thereby providing an effect of reducing the manufacturing cost of the product.

The effects of the present disclosure are not limited to those described above, and effects not mentioned herein may be evidently understood from the following description by those skilled in the art.

### [Description of Drawings]

FIG. 1 is a perspective view illustrating an armrest assembly and a chair including the armrest assembly according to an embodiment of the present disclosure.
FIGS. 2a and 2b are plan views of FIG. 1, illustrating sliding movement in a forward and backward direction and swinging movement in a leftward and rightward direction of the armrest assembly according to an embodiment of the present disclosure.
FIG. 3 is a perspective view illustrating the armrest assembly according to an embodiment of the present disclosure.
FIG. 4 is an exploded perspective view of FIG. 3.
FIGS. 5a and 5b are a downward sectional perspective view and an upward sectional perspective view taken along line A-A of FIG. 3 after partially disassembling components.
FIGS. 6a and 6b are a downward exploded perspective view and an upward exploded perspective view illustrating a spindle guide unit provided between an upper pad and a lower pad among components of the armrest assembly according to an embodiment of the present disclosure.
FIG. 7 is a sectional perspective view taken along line B-B of FIG. 3.
FIG. 8 shows a composite sectional perspective view and a partially enlarged view taken along lines A-A and B-B of FIG. 3, in a state in which the upper pad is separated upward from the lower pad among the components of the armrest assembly according to an embodiment of the present disclosure.
FIGS. 9 and 10 are plan sectional views illustrating states before and after sliding movement in the forward and backward direction and swinging movement in the leftward and rightward direction by the spindle guide unit among the components of the armrest assembly according to an embodiment of the present disclosure.

### [Description of Reference Numerals]

| | | | |
|---|---|---|---|
| 1: | chair | 10: | body |
| 20: | seat portion | 30: | leg portion |
| 50: | backrest portion | 60: | headrest |
| 100: | armrest assembly | 110: | height adjustment portion |
| 111: | armrest support | 114: | upper end panel |
| 117: | moving guide panel | 118: | moving hole |
| 121: | lower pad | 122: | rack guide slot |
| 125: | rack gear | 126: | upper pad |
| 200: | spindle guide unit | 210: | disk body panel |
| 220A,B: | damping pinion gear sets | 221: | damping body |
| 223: | damping gear | 224: | damping shaft |
| 225: | damping blade | 230: | fastening screw |

### [Best Mode]

Hereinafter, an armrest assembly and a chair including the armrest assembly according to an embodiment of the present disclosure will be described in detail with reference to the accompanying drawings.

It should be noted that in assigning reference numerals of each drawing, like reference numerals refer to like elements as much as possible even though like elements are shown in different drawings. Furthermore, in the following description of embodiments of the present disclosure, detailed descriptions of related known configurations or functions will be omitted when it is determined that the detailed descriptions would obscure the understanding of the embodiments of the present disclosure.

In addition, the terms first, second, A, B, (a), and (b) may be used to describe elements of the embodiments of the present disclosure. These terms are used only for the purpose of discriminating one constituent element from another constituent element, and the nature, the sequences, or the orders of the constituent elements are not limited by the terms. Furthermore, unless otherwise defined, all terms used herein, including technical or scientific terms, have the same meaning as commonly understood by those skilled in the art to which the present disclosure pertains. The terms such as those defined in commonly used dictionaries should be interpreted as having meanings consistent with meanings in the context of related technologies and should not be interpreted as ideal or excessively formal meanings unless explicitly defined in the present application.

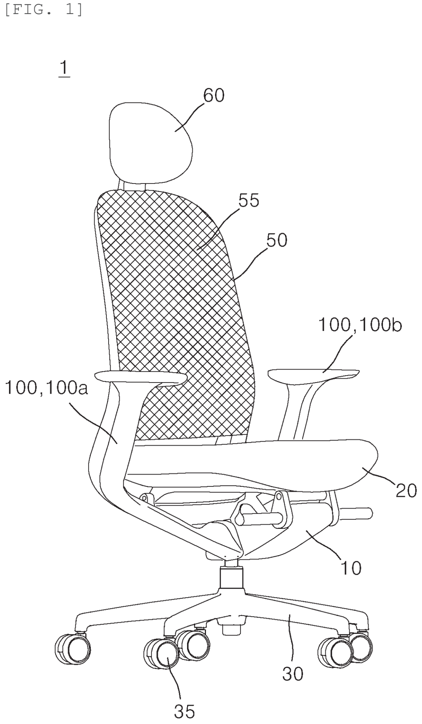

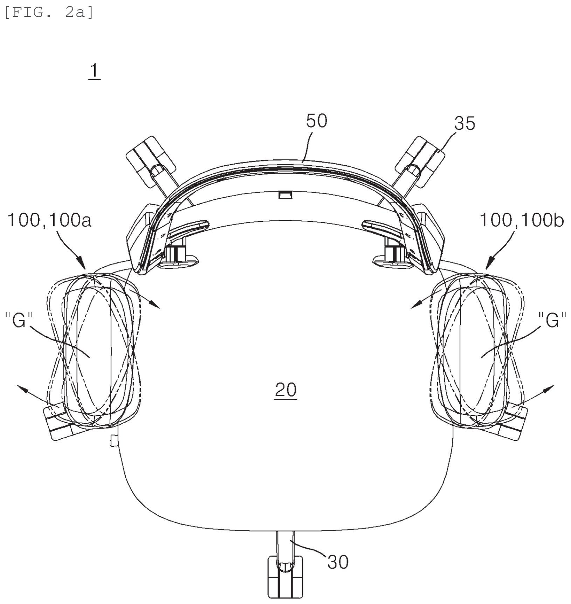

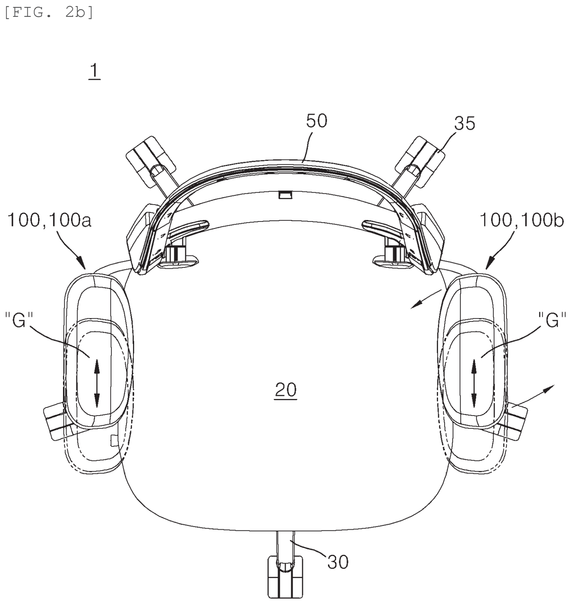

FIG. 1 is a perspective view illustrating an armrest assembly and a chair including the armrest assembly according to an embodiment of the present disclosure. FIGS. 2a and 2b are plan views of FIG. 1, illustrating sliding movement in a forward and backward direction and swinging movement in a leftward and rightward direction of the armrest assembly according to an embodiment of the present disclosure.

Referring to FIGS. 2a and 2b, a chair 1 according to an embodiment of the present disclosure may include an armrest assembly 100 configured to support both arms of a user seated on a seat portion 20.

More specifically, as referred to in FIG. 1, the chair 1 according to an embodiment of the present disclosure includes a body 10, the seat portion 20 disposed parallel to an upper portion of the body 10 and configured to allow the user to sit thereon, a leg portion 30 disposed below the body 10 and supported on a floor surface of a placement space, a backrest portion 50 disposed at a rear end of the seat portion 20 and configured to support the back portion of the user, and the armrest assembly 100 according to an embodiment of the present disclosure.

The seat portion 20 may slide in a forward and backward direction to be adjusted according to a seated posture and seating position of the user. A controller (not shown) that adjusts the forward and backward sliding movement of the seat portion 20 may be installed in the body 10.

In the backrest portion 50, a back support 55 configured to support a back portion of the user may further be installed. The back support 55 may be provided in the form of a foam cushion designed to more comfortably support the back portion of the user, or, as referred to in FIG. 1, may be provided in the form of a breathable mesh.

A headrest 60 configured to support a head portion of the user may further be installed on an upper end of the backrest portion 50. The headrest 60 may be configured to be tiltable in the forward and backward direction about a horizontal axis (not shown) extending in a left-right direction.

The leg portion 30 may be provided such that the body 10 is rotatable in a horizontal direction about a connection shaft (not designated with a reference numeral). The leg portion 30 may include a plurality of branches which extend in a radial direction from the connection shaft. Bottom wheels 35 configured to roll on the floor surface of the placement space may be installed on respective distal ends of the plurality of branches.

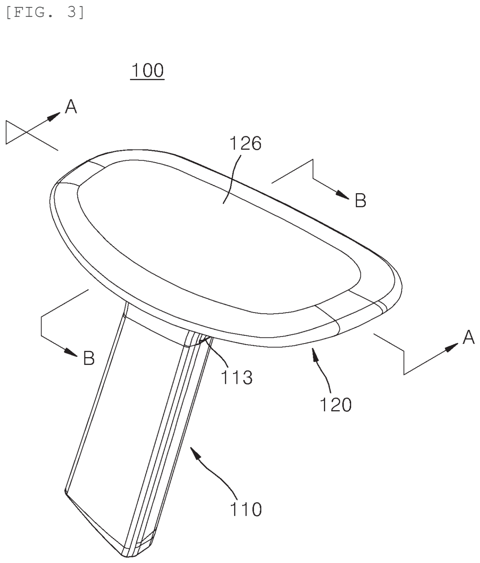

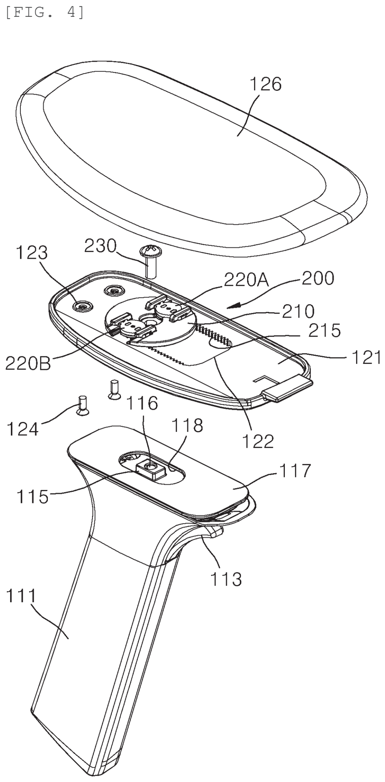

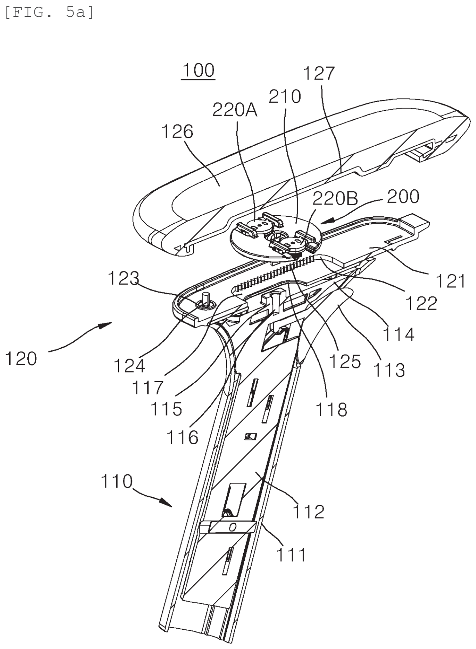

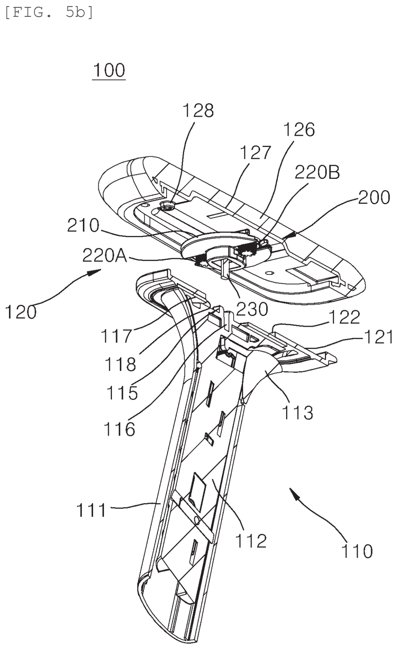

FIG. 3 is a perspective view illustrating the armrest assembly according to an embodiment of the present disclosure. FIG. 4 is an exploded perspective view of FIG. 3. FIGS. 5a and 5b are a downward sectional perspective view and an upward sectional perspective view taken along line A-A of FIG. 3 after partially disassembling components.

As referred to in FIGS. 3 and 4, the armrest assembly 100 may be provided to extend upward on each of the left and right sides of the body 10. A distal end of the armrest assembly 100 may be adjustable in height by a height adjustment portion 110 including an armrest support 111 provided to move vertically within an armrest installation portion (not designated with a reference numeral).

The armrest assembly 100 may include a right armrest 100a installed on the right side of the body 10 (see the left side of the seat portion 20 in FIG. 1), and a left armrest 100b installed on the left side of the body 10 (see the right side of the seat portion 20 in FIG. 1).

In addition, as referred to in FIG. 2a, the armrest assembly 100 may be configured such that a front end and a rear end thereof are respectively swingable at predefined angles in the leftward and rightward direction about a pivot point G formed above the armrest support 111 among the components of the height adjustment portion 110, so that the arms of the user can be more comfortably supported.

Furthermore, as referred to in FIG. 2b, the armrest assembly 100 may slide by a predefined distance in the forward and backward direction above the armrest support 111, thereby enabling the arms of the user to be supported appropriately according to a seating position of the user on the seat portion 20.

In other words, the armrest assembly 100 according to an embodiment of the present disclosure may not only be swingably adjusted in the leftward and rightward direction and secured in place so as to more comfortably support the arms of the user according to an arm placement angle of the user, but also be slidably adjusted in the forward and backward direction and secured in place so as to more comfortably support the arms of the user according to a forward and backward seating position of the user on the seat portion 20.

As referred to in FIGS. 3 and 4, the armrest assembly 100 according to an embodiment of the present disclosure includes an armrest support pad 120 configured to support the arm of the user and to be slidable in the forward and backward direction and swingable in the leftward and rightward direction at an upper end of the armrest support 111, and a spindle guide unit 200 secured to the upper end of the armrest support 111 and configured to guide the sliding movement and the swinging movement of the armrest support pad 120.

The height adjustment portion 110 may further include a height adjustment guide panel 112 disposed inside the armrest support 111. The height adjustment guide panel 112 allows the user to perform height adjustment by using a height adjustment button 113 disposed to protrude to the outside from the armrest support 111.

The upper end of the armrest support 111 may be provided as an upper end panel 114 that forms an upper surface of the height adjustment guide panel 112. The upper end panel 114 may integrally include a coupling end 115 that is provided to protrude upward and has a screw fastening hole 116 formed to enable the spindle guide unit 200 to be secured to the coupling end 115 by a screw coupling method.

As referred to in FIGS. 5a and 5b, the armrest support pad 120 may include an upper pad 126 on which the arm of the user is directly supported, and a lower pad 121 disposed between a lower portion of the upper pad 126 and an upper portion of the armrest support 111.

In addition, as referred to in FIGS. 5a and 5b, the armrest support pad 120 may further include a moving guide panel 117 that is disposed below the lower pad 121 and formed with a predefined moving hole 118 through which a region surrounding the coupling end 115, by which the spindle guide unit 200 is coupled on the upper end panel 114 of the armrest support 111, is exposed.

The moving hole 118 formed in the moving guide panel 117 may perform a function of limiting a sliding movement distance in the forward and backward direction or a swinging movement angle in the leftward and rightward direction of the armrest support pad 120, while moving in conjunction with the upper pad 126 and the lower pad 121 when the armrest support pad 120 slides in the forward and backward direction or swings in the leftward and rightward direction via the spindle guide unit 200.

As referred to in FIGS. 5a and 5b, the upper pad 126 and the lower pad 121 may be configured to be integrally movable by a structure in which at least one panel fastening screw 124, passing through a screw through-hole 123 formed in the lower pad 121 from a lower side to an upper side thereof, is fastened to a screw fastening boss 128 formed on the lower portion of the upper pad 126. In addition, the moving guide panel 117 may be coupled to the lower pad 121 in such a manner as to be attached in close contact with a lower surface of the lower pad 121.

The upper pad 126, which directly supports the arm of the user, may be formed in a foam shape made of a cushion material and may be manufactured by an insert injection molding method in which the foam is molded onto a frame pad 127 made of a different and relatively rigid material.

The above-described screw fastening boss 128 may be integrally formed with the frame pad 127.

In addition, a lower portion of the frame pad 127, which is located approximately between the frame pad 127 and the lower pad 121, may be bent to form a predefined installation space in which the spindle guide unit 200, which is described later, is installed.

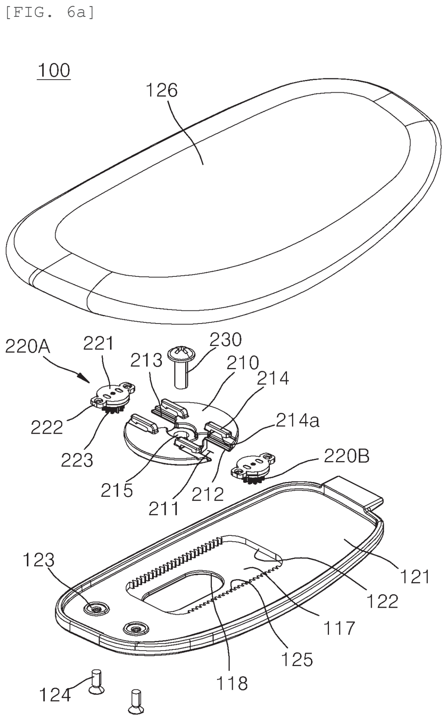

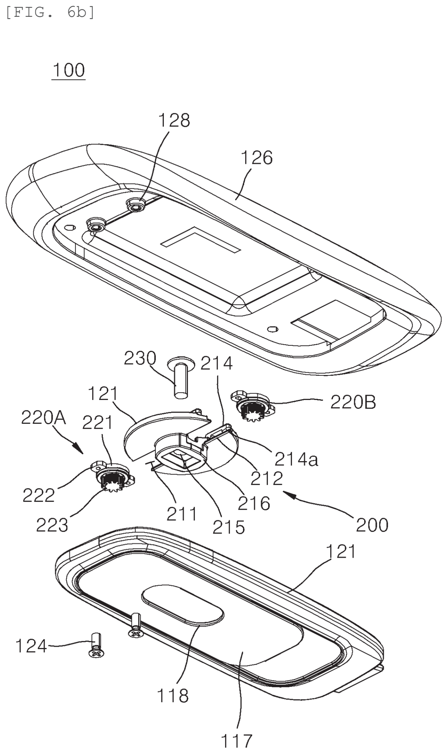

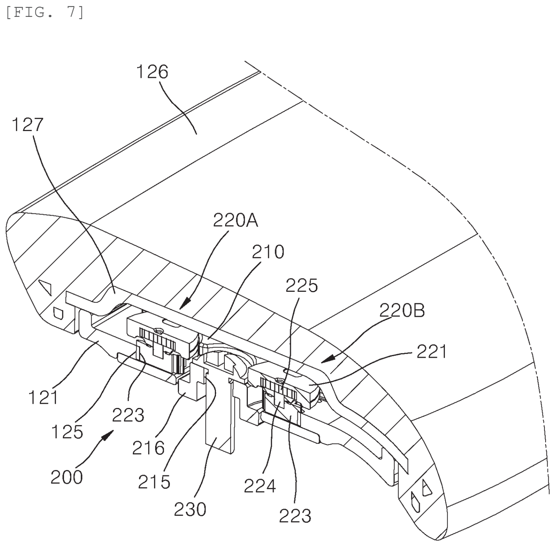

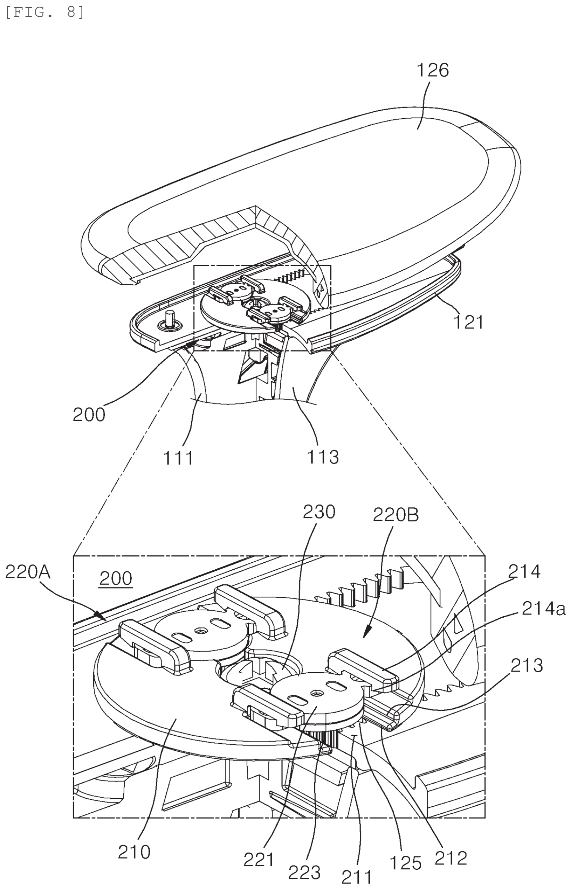

FIGS. 6a and 6b are a downward exploded perspective view and an upward exploded perspective view illustrating the spindle guide unit provided between the upper pad and the lower pad among the components of the armrest assembly according to an embodiment of the present disclosure. FIG. 7 is a sectional perspective view taken along line B-B of FIG. 3. FIG. 8 shows a composite sectional perspective view and a partially enlarged view taken along lines A-A and B-B of FIG. 3, in a state in which the upper pad is separated upward from the lower pad among the components of the armrest assembly according to an embodiment of the present disclosure.

As referred to in FIGS. 6a and 6b, the spindle guide unit 200 may include a disk body panel 210 that has a circular plate shape and is horizontally secured to the upper end panel 114 which forms the upper end of the armrest support 111, and a pair of damping pinion gear sets 220A and 220B that are hooked to the disk body panel 210 in a sliding manner, and gear-engaged with the armrest support pad 120 to damp an external manipulation force applied by the user.

As described above, the disk body panel 210 is formed in a circular plate shape, and a guide fastening screw hole 215 penetrating in a vertical direction may be formed at a central portion of the disk body panel 210.

The disk body panel 210 may be secured by an operation of tightening a fastening screw 230, passing through the guide fastening screw hole 215 from an upper side of the disk body panel 210, into the screw fastening hole 116 of the coupling end 115, which is integrally formed on the upper end panel 114 of the armrest support 111.

The coupling end 115 has a non-circular cross-sectional shape and protrudes upward from the upper end panel 114. A fitting rib 216 may be formed on a lower portion of the disk body panel 210 and may be fitted over the coupling end 115 having the non-circular cross-section. Accordingly, even when an external manipulation force is applied by the user to the armrest support pad 120, rotation of the disk body panel 210 about the fastening screw 230 may be prevented.

As referred to in FIGS. 6a and 6b, each of the pair of damping pinion gear sets 220A and 220B may include a damping body 221 coupled to the disk body panel 210, with damping fluid received therein, and a damping gear 223 coupled to a lower portion of the damping body 221 via a damping shaft 224, the damping gear 223 being rotatably formed with pinion gear teeth (reference numeral not shown) that are engaged with a corresponding one of a pair of rack gears 125 formed in the lower pad 121.

Here, as referred to in FIGS. 6a and 6b, the pair of damping pinion gear sets 220A and 220B may be coupled to the disk body panel 210 by an insertion operation through left and right rail recesses 211, which are formed by cutting out portions of an outer circumferential surface of the disk body panel 210.

Each of the left and right rail recesses 211 formed in the disk body panel 210 may include, in a lower portion thereof, a stepped rail surface 213 having a stepped portion 212 that is formed to be larger than a diameter of the damping gear 223 and smaller than a diameter of the damping body 221. Accordingly, when the damping body 221 is inserted into each of the left and right rail recesses 211, a lower surface of the perimeter of the damping body 221 may come into contact with the stepped rail surface 213, thereby guiding the sliding coupling.

In addition, the disk body panel 210 may be provided with a pair of hook latches 214 configured to latch and retain the damping body 221 to prevent the damping body 221, after being inserted into each of the left and right rail recesses 211, from being removed outward. The pair of hook latches 214 may be formed to extend in parallel at a predefined distance above an upper surface of the disk body panel 210, and may each have a hook protrusion 214a formed to protrude downward from a distal end thereof, so that hook locking ends 222 protruding from front and rear sides of the damping body 221 can be locked and held to prevent a removal of the damping body 221 in an outward direction (i.e., in the leftward and rightward direction).

In this manner, in a state in which the armrest support pad 120 is gear-engaged with the spindle guide unit 200 secured to the coupling end 115 of the upper end panel 114, the sliding movement and swinging movement may be guided.

More specifically, the lower pad 121 of the armrest support pad 120 may be formed with a rack guide slot 122, which is larger than the moving hole 118 formed in the moving guide panel 117 and is formed to be elongated in the forward and backward direction and vertically penetrate through the lower pad 121.

As referred to in FIGS. 6a and 6b, it is preferable that the rack guide slot 122 be formed to have a width between left and right inner ends that allows the respective damping gears 223 of the pair of damping pinion gear sets 220A and 220B, which are described below as part of the spindle guide unit 200, to be engaged with the rack gears 125 formed on the left and right inner ends, respectively.

In other words, the pair of damping pinion gear sets 220A and 220B may be respectively engaged with the pair of rack gears 125 formed on the left and right ends of the rack guide slot 122, which is formed in the lower pad 121 to be elongated in the forward and backward direction and vertically penetrate through the lower pad 121.

The disk body panel 210 may be formed to have a diameter greater than a left-right width of the rack guide slot 122 formed in the lower pad 121. Accordingly, when the spindle guide unit 200 is installed in the installation space between the lower pad 121 and the upper pad 126, the disk body panel 210 is caught on the lower pad 121 in a downward direction below the rack guide slot 122 of the lower pad 121, thereby preventing the armrest support pad 120 from being displaced outward when an external force is applied thereto by the user.

As referred to in FIG. 7, the damping fluid for damping an external force applied by the user may be received in an interior of the damping body 221. A portion of the damping shaft 224 of the damping gear 223 that extends into the interior of the damping body 221 may be provided with a plurality of damping blades 225 configured to generate friction with the damping fluid when the damping gear 223 rotates.

When the spindle guide unit 200 having the above-described configuration is installed in the installation space between the lower pad 121 and the upper pad 126, as referred to in FIG. 8, and when the disk body panel 210 is secured to the coupling end 115 of the upper end panel 114 of the armrest support 111 via the fastening screw 230, a lower surface of the disk body panel 210 is positioned above an upper surface of a portion of the lower pad 121 around the rack guide slot 122, and the pinion gear teeth of the damping gears 223 among the components of the pair of damping pinion gear sets 220A and 220B may be engaged with the rack gears 125 formed in the rack guide slot 122 of the lower pad 121.

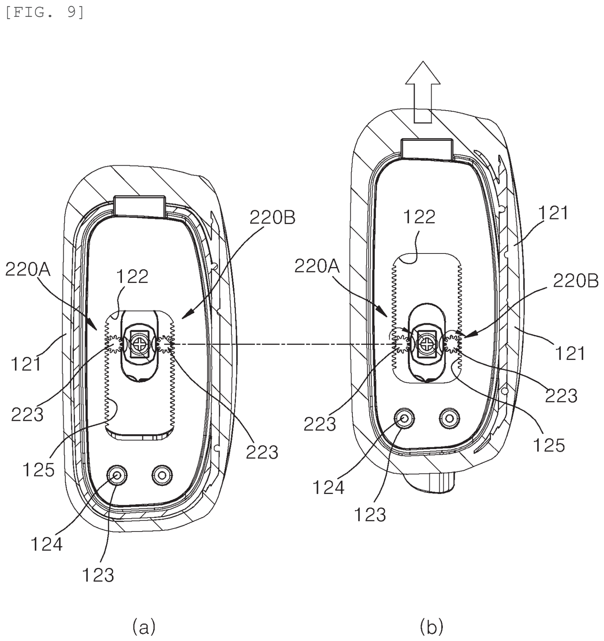

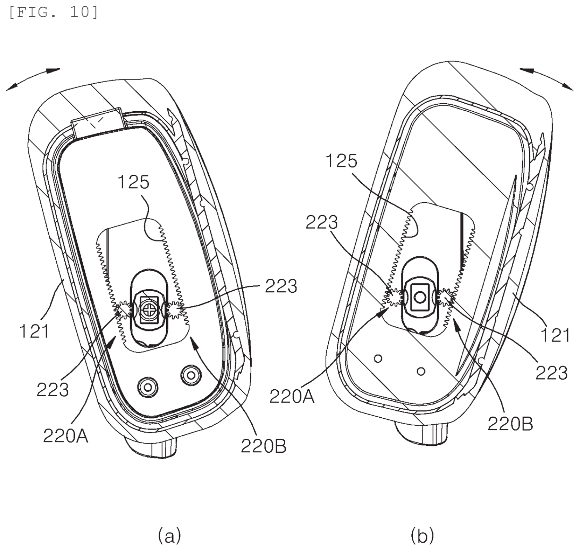

FIGS. 9 and 10 are plan sectional views illustrating states before and after sliding movement in the forward and backward direction and swinging movement in the leftward and rightward direction by the spindle guide unit among the components of the armrest assembly according to an embodiment of the present disclosure.

The sliding movement in the forward and backward direction and the swinging movement in the leftward and rightward direction of the armrest assembly 100 according to an embodiment of the present disclosure having the above-mentioned configuration will be briefly described below with reference to FIGS. 9 and 10.

First, as referred to in FIG. 9, in a state where the user supports the left arm on the upper surface of the armrest support pad 120 (see (a) of FIG. 9), when a predefined external force is applied forward, the respective damping gears 223 of the pair of damping pinion gear sets 220A and 220B of the spindle guide unit 200 are guided by an operation of engaging with the rack gears 125 formed in the rack guide slot 122 of the lower pad 121, so that the armrest support pad 120 slides forward.

Next, as referred to in FIG. 10, when the user applies a predefined external force in a desired direction in order to adjust the armrest support pad 120 to a certain angle in the leftward and rightward direction in accordance with the angle of the left arm, the respective damping gears 223 of the pair of damping pinion gear sets 220A and 220B of the spindle guide unit 200 are guided by an operation of engaging with the rack gears 125 formed in the rack guide slot 122 of the lower pad 121, as referred to in (a) and (b) of FIG. 10, so that the armrest support pad 120 swings by a predefined angle to the left or right.

Here, as the external force applied by the user is damped by an interaction between the damping fluid received in the damping body 221 and the damping blades 225 of the damping shaft 224, the damping force may prevent the armrest support pad 120 from moving arbitrarily when no external force is applied by the user or when the external force is equal to or less than a predefined level.

Furthermore, in accordance with the armrest assembly 100 and the chair 1 including the armrest assembly according to an embodiment of the present disclosure, both the forward and backward sliding movement and the leftward and rightward swinging movement of the armrest support pad 120 may be implemented through the combined action of the spindle guide unit 200 without requiring separate components for each type of movement. Accordingly, the number of components and the number of assembly processes can be reduced.

Moreover, in accordance with the armrest assembly 100 and the chair including the armrest assembly according to an embodiment of the present disclosure, a step structure for implementing a conventional detent structure does not need to be provided. Therefore, flexibility in design changes can be secured without being restricted by the design of the chair itself (e.g., layout or size), which has conventionally restricted design changes aimed at increasing the number of steps.

In addition, because the pair of damping pinion gear sets 220A and 220B are configured to appropriately damp an external force applied by the user through the damping function thereof, a separate detent (multi-step) structure is not required. Accordingly, the user can adjust the forward and backward sliding movement and the leftward and rightward swinging movement to a desired position, thereby significantly improving user convenience.

The armrest assembly and the chair including the armrest assembly according to embodiments of the present disclosure have been described in detail with reference to the accompanying drawings. However, the present disclosure is not necessarily limited by the embodiments, and various modifications of the embodiments and any other embodiments equivalent thereto may of course be carried out by those skilled in the art to which the present disclosure pertains. Accordingly, the true protection scope of the present disclosure should be determined by the appended claims.

### [Industrial Applicability]

The present disclosure provides an armrest assembly and a chair including the armrest assembly, which perform a smooth damping operation in response to an external force applied when a user adjusts an armrest support pad, which supports the arm of the user, through forward and backward sliding movement and leftward and rightward swinging movement, thereby improving user convenience and emotional quality of the product.

## Claims

1. An armrest assembly, comprising:
an armrest support pad configured to support an arm of a user and perform sliding movement in a forward and backward direction and swinging movement in a leftward and rightward direction on an upper end of an armrest support; and
a spindle guide unit secured to the upper end of the armrest support, and configured to guide the sliding movement and the swinging movement of the armrest support pad,
wherein the sliding movement and the swinging movement of the armrest support pad are guided, with the armrest support pad gear-engaged with the spindle guide unit.

2. The armrest assembly of claim 1, wherein the spindle guide unit comprises:
a disk body panel having a circular plate shape and secured horizontally to the upper end of the armrest support; and
a pair of damping pinion gear sets hooked to the disk body panel in a sliding manner, and gear-engaged with the armrest support pad to damp an external manipulation force applied by the user.

3. The armrest assembly of claim 2, wherein the armrest support pad comprises:
an upper pad configured to directly support the arm of the user; and
a lower pad disposed between a lower portion of the upper pad and an upper portion of the armrest support,
wherein the pair of damping pinion gear sets are respectively engaged with a pair of rack gears formed at left and right opposite ends of a rack guide slot formed in the lower pad, the rack guide slot being elongated in the forward and backward direction and vertically penetrating through the lower pad.

4. The armrest assembly of claim 3, wherein the disk body panel has a diameter greater than a left-right width of the rack guide slot.

5. The armrest assembly of claim 3, wherein the pair of damping pinion gear sets are coupled to the disk body panel by an insertion operation through left and right rail recesses formed by cutting out portions of an outer circumferential surface of the disk body panel.

6. The armrest assembly of claim 3, wherein each of the pair of damping pinion gear sets comprises:
a damping body coupled to the disk body panel and having damping fluid received therein; and
a damping gear coupled to a lower portion of the damping body via a damping shaft, the damping gear being rotatably formed with pinion gear teeth that are engaged with a corresponding one of the pair of rack gears of the lower pad.

7. The armrest assembly of claim 6, wherein a portion of the damping shaft of the damping gear that extends into an interior of the damping body is provided with a plurality of damping blades configured to generate friction with the damping fluid when the damping gear rotates.

8. The armrest assembly of claim 6,
wherein the damping body is formed to have a diameter greater than a diameter of the damping gear, and
wherein, when the damping body is inserted into a corresponding one of the left and right rail recesses formed in the disk body panel, a lower peripheral surface of the damping body is supported on a stepped rail surface formed in the corresponding one of the left and right rail recesses, the stepped rail surface being formed to have a size greater than the diameter of the damping gear and less than the diameter of the damping body.

9. The armrest assembly of claim 6, wherein the disk body panel is provided with a pair of hook latches configured to latch and retain the damping body to prevent the damping body, after being inserted into a corresponding one of the left and right rail recesses, from being removed outward.

10. The armrest assembly of claim 3,
wherein the armrest support pad further includes a moving guide panel disposed below the lower pad and formed with a predefined moving hole through which a region surrounding a coupling end, by which the spindle guide unit is coupled to the armrest support, is exposed,
wherein the armrest support pad is configured to perform the sliding movement and the swing movement in conjunction with the moving guide panel, the sliding movement and the swing movement being restricted within a range defined by the moving hole.

11. A chair comprising the armrest assembly according to any one of claims 1 to 10.
